# EUROPEAN PATENT SPECIFICATION

(11) **EP 2 181 537 B1**
(45) Date of publication and mention of the grant of the patent: **26.01.2011**
(21) Application number: 08807700.3
(22) Date of filing: 17.09.2008
(51) Int. Cl.: H04L 29/06

(54) **SUPPORT OF TRIPLE PLAY SERVICES IN USER DEVICES**
UNTERSTÜTZUNG VON TRIPLE-PLAY-DIENSTEN IN BENUTZERENDGERÄTEN
SUPPORT DE SERVICE TRIPLE DANS DES DISPOSITIFS UTILISATEURS

(30) Priority: 12.10.2007 US 871284
(43) Date of publication of application: 05.05.2010
(73) Proprietor: Telefonaktiebolaget LM Ericsson (publ), 164 83 Stockholm (SE)
(72) Inventor: MONETTE, Sylvain, Saratoga California 95070 (US); GIGUERE, Mathieu, Vaudreuil-sur-le-lac Québec J7V 8P3 (CA); JULIEN, Martin, Laval, Québec H7P 5H1 (CA); TREMBLAY, Benoit, Laval, Québec H7Y 1G2 (CA)
(74) Representative: HOFFMANN EITLE
(86) International application number: PCT/IB2008/053777
(87) International publication number: WO 2009/047662

(56) References cited:
- US-B1- 6 339 595
- US-B1- 7 095 738
- TROTTER AGILENT TECHNOLOGIES G: "Terminology for Forwarding Information Base (FIB) based Router Performance; rfc3222.txt" IETF STANDARD, INTERNET ENGINEERING TASK FORCE, IETF, CH, 1 December 2001 (2001-12-01), XP015009001 ISSN: 0000-0003 cited in the application

## Description

### Background of the invention

### Field of the invention

The present invention relates to a method and a user device for exchanging data packets between a user device and a plurality of service providers.

### Description of the Related Art

With the advent of highly performing, Internet Protocol (IP) devices, it is becoming common to offer a variety of simultaneous services for use on a single device. For example, voice, data and video services may be obtained by a user on a same device. This capability is sometimes called 'Triple Play'. When all services provided to the user are offered by a same service provider, connectivity between the user device and a network of the service provider may be simply realized. However, the user may prefer to purchase connection services from one access provider, and then to purchase value-added services from a plurality of distinct service providers.

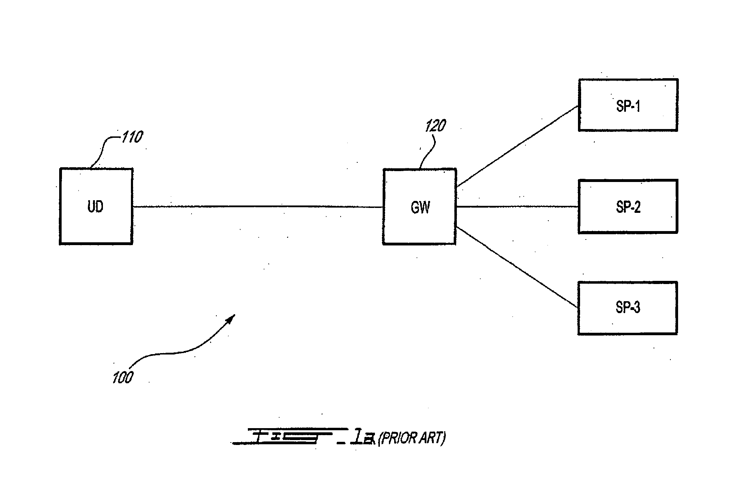

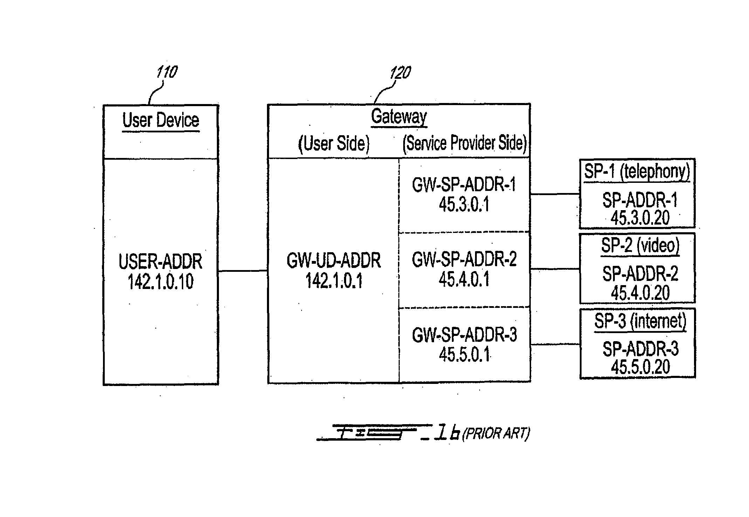

Figure la (prior art) shows an IP network 100 providing a multiplicity of services. The network 100 comprises a user device (UD) 110, a gateway (GW) 120 and three service providers (SP) SP-1, SP-2 and SP-3. The GW 120 usually belongs to an Internet service provider (ISP) that provides connectivity services to end-users. The service providers provide value-added services. The IP network 100 allows the UD 110 to connect via the GW 120 to any number of SPs to obtain therefrom various types of value-added services. For example, SP-1 could offer a telephony service, such as Voice over IP (VoIP) service, SP-2 could offer a video service, such as an IP television (IPTV) service, and SP-3 could offer basic Internet services such as electronic mail, file transfer protocol (FTP) and web browsing. In order to enable setting up of a service received at the UD 110 from any one of the SPs, the UD 110 initiates a request for service which is sent through the GW 120 towards a selected SP. Various IP addresses are used for communication between the UD 110, the GW 120 and the SPs, as shown on Figure 1b, which is a prior art representation of IP address associations. The GW 120 allocates an IP address USER-ADDR, which is for example equal to 142.1.0.10, to the UD 110 and informs the UD 110 of a user side GW IP address GW-UD-ADDR equal to 142.1.0.1. The selected SP, for example SP-1, allocates a server side IP address GW-SP-ADDR-1 equal to 45.3.0.1 to the GW 120 and provides information about its own IP address SP-ADDR-1 equal to 45.3.0.20. The SP IP address and the GW 120 server side IP addresses can then be used as source and destination addresses for exchanging data packets therebetween. Further, the UD IP address and the GW user side IP address can be used as source and destination addresses for exchanging data packets between the UD 110 and the GW 120. Packets intended for transmission between the UD 110 and one of the SPs are forwarded to their destinations by the GW 120. Because this UD or other UDs may initiate several service requests to a variety of SPs through the same GW 120, each SP having received a request for service allocates distinct IP addresses to the GW 120 and informs the GW 120 of their own IP addresses.

IP addresses currently in use are for the most part defined according to the Internet Protocol version 4 (IPv4), defined by the Request for Comments (RFC) 791 of the Internet Engineering Task Force (IETF). Addresses in the public domain are in short supply; the range of the IP address space according to IPv4 is limited to 4,294,967,296 possible unique addresses. Because some are reserved for special purposes such as private networks (∼18 million addresses) or multicast addresses (∼1 million addresses), the actual number of available addresses in the public domain is even less. IP version 6 (IPv6), as defined in RFC 2460 of the IETF, has a much wider range of possible IP addresses. While it is theoretically possible to allocate unique addresses to every Internet capable device worldwide, this can only be achieved with great efforts in avoiding address collisions. As such, the possibility of having conflicting IP addresses remains in the case of IPv6. As a result, it is common to use private IP addresses within a private network, because the private network can manage its addresses for ensuring that no address collision occurs. However, private IP addresses can only be recognized within a private IP domain.

TCP sockets, as defined in RFC 793 Transmission Control Protocol (TCP) of the IETF, and VLAN tags, as defined in the 802.3ac standard of the Institute of Electrical and Electronics Engineers (IEEE), are well-known methods used to distinguish packets arriving at a user device for distinct applications. These methods cannot overcome any confusion between colliding IP addresses assigned to an end-user device. These methods thus only work when a single IP address is assigned to the end-user device, generally by the gateway. Service providers offer various types of services, such as for example FTP, VoIP and IPTV, which require different quality of service (QoS) characteristics. Allocation of IP addresses to an end-user device by a gateway leaves it to the gateway to control the QoS offered to the end-user. Document US 6 339 595 published on January 2002 describes a method and device for exchanging data packets between a user device and a plurality of service providers.

There is currently no efficient means for allowing connection of a user device to a plurality of service provider domains, with the capability of accessing several services at once, with controlled quality of service, without risk of collision between the private IP addresses.

### Summary of the Invention

It is therefore a broad object of this invention to provide support for triple play services by use of a method and a user device for allocating private addresses, by various servers to the user device, without collision between the addresses.

A first aspect of the present invention is directed a method of exchanging data packets between a user device and a plurality of service providers. The method comprises a definition in the user device of at least two forwarding information bases (FIB) for corresponding at least two service providers. Each FIB comprises an identity and an internet protocol (IP) address of a corresponding service provider. Each FIB is also associated with at least one service type, with a corresponding IP address allocated to the user device by the corresponding service provider, and with a corresponding tag. A tag is inserted in a data packet. That tag is then used to identify a service provider selected by a user, along with a service type, both of which correspond to the data packet.

A second aspect of the present invention is directed to a variant of the hereinabove method wherein a FIB corresponding to the selected service provider comprises a first and a second virtual location area networks (VLAN). The first VLAN comprises the user device, the selected service type and the selected service provider. The second VLAN comprises another service type.

A third aspect of the present invention is directed to a user device for exchanging data packets with a plurality of service providers. The user device comprises an input/ output port for receiving data packets from the service providers. The user device has two or more service units capable of processing the data packets, each service unit supporting at least one type of service. Within the user device, a memory stores at least two forwarding information bases (FIB) for corresponding at least two service providers. Each FIB comprises an identity of a service provider, and an IP address of the identified service provider. Each FIB is further associated with at least one service type, with a corresponding IP address allocated to the user device by the corresponding service provider, and with a corresponding tag. A service selector retrieves a tag from a received data packet, reads from the memory a service type and an identity of a selected service provider, both of which are selected by a user, by use of that tag, and forwards the received data packet towards one of the two or more service units based on the selected service type and on the identity of the selected service provider.

### Brief Description of the Drawings

For a more detailed understanding of the invention, for further objects and advantages thereof, reference can now be made to the following description, taken in conjunction with the accompanying drawings, in which:

Figure 1a is a prior art representation of an IP network providing a multiplicity of services;

Figure 1b is a prior art representation of IP address associations;

Figure 2a shows an exemplary triple-play network according to the present invention;

Figure 2b shows exemplary IP address associations according to the present invention;

Figure 3a shows a service type to service provider mapping table found within a user device;

Figure 3b shows forwarding information base table found within a user device;

Figure 3c shows a routing table found within a user device;

Figure 4 shows a method of exchanging data packets between a user device and one of a plurality of service providers according to an aspect of the present invention;

Figure 5 shows an exemplary content of a multi forwarding information base table according to some aspects of the present invention;

Figure 6 is a sequence diagram showing an exchange of data packets between a user device and a service provider according to other aspects of the present invention;

Figure 7 shows an exemplary user device built according to the present invention; and

Figure 8 shows an exemplary gateway used to support the present invention.

### Detailed Description

The innovative teachings of the present invention will be described with particular reference to various exemplary uses and aspects of the preferred embodiment. However, it should be understood that this embodiment provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the description of the figures, like numerals represent like elements of the invention.

The present invention provides a method and a user device for exchanging data packets between the user device and a plurality of service providers. The various service providers offer a variety of service types, allowing end-users to enjoy so-called 'Triple Play' services. In order to enable allocation of IP addresses by the service providers to user devices, in support of quality of service control by the service providers, while preventing any risk of ambiguity, or collisions, between private addresses, virtualization of routing is provided, as is explained below.

Request For Comments (RFC) 3222 of the Internet Engineering Task Force (IETF) defines a Forwarding Information Base (FIB) as a table containing information necessary to forward IP packets, or datagrams. IP routing is commonly implemented by use of a FIB in a node that sends IP packets. In the present invention, virtualization of IP routing is provided by defining a multi-FIB architecture, each FIB corresponding to one IP domain. Virtual local area networks (VLAN) are defined, wherein the user device and one of the service providers are assigned into a logical group for having a service session of a given service type. For each SP, a distinct FIB, implemented as a distinct virtual IP stack, is implemented in the user device. For each service session, the use of a specific FIB for a distinct SP allows that SP to allocate a distinct IP address to the user device. These allocations are associated to service mappings, each service mapping comprising an identity of the relevant SP, an address of the SP, and a service type. The FIB may have one or more VLANs corresponding to one or more service mappings defined between the SP and the UD. The UD may set up one or more service sessions corresponding to the one or more service mappings defined for the same SP or for distinct SPs. In order to support cases where one SP provides more than one service to a same UD, logical interfaces are defined to distinguish between service sessions. As taught herein, a specific identifier, called a tag, is associated with each logical interface, and added to each data packet exchanged between the user device and any of the service providers, for use between the user device and the gateway. The tag enables the user device to uniquely identify the FIB that defines a relationship between the user device and one of the service providers, and the logical interface that defines the service session within the FIB. Use of the multi-FIB architecture enables to properly route packets between the user device and the service providers, whether or not IP addresses of the user device, gateway and service providers are public or private, and whether or not the IP addresses are distinct or overlap in values, by associating tags comprised in data packets with service mappings, by use of the logical interfaces.

In the context of the present invention, a user device may comprise one or more interconnected components. One component, for example a router, may act as an entry point into a user domain and other components may be connected thereto. User devices, or their components, may take various forms such as computers, television set-top boxes, moving pictures expert group (MPEG) audio layer 3 (MP3) players, personal video players, personal digital assistants, mobile terminals and the like.

The gateway may be a router, a Wireless Local Area Network (WLAN) router, an access node, an access edge site, and the like. Typically, the gateway adapts local communication with user devices with global communication towards distant service providers. A typical gateway serves a large number of user devices. Instead of being implemented in a single node, the features of the gateway may be shared between several nodes. The gateway may be connected directly to user devices, or may alternatively be connected by indirect means comprising other routers, access nodes, cellular communication equipment, and the like. One user device may get access to distinct service providers through one gateway or through distinct gateways.

A service provider may comprise one or many servers. The service provider may have one server per each type of service it offers. Alternatively, a given server may be capable of supporting several service types. Several servers within a same service provider domain may be used for load sharing, redundancy, or may be selected according to a geographical distance from a requesting user domain. A server may simply authorize access to a service while one or more other servers of the same service provider may actually deliver content to users. Generally, the following description of the present invention may be read considering equivalence of the terms 'server' and 'service provider'.

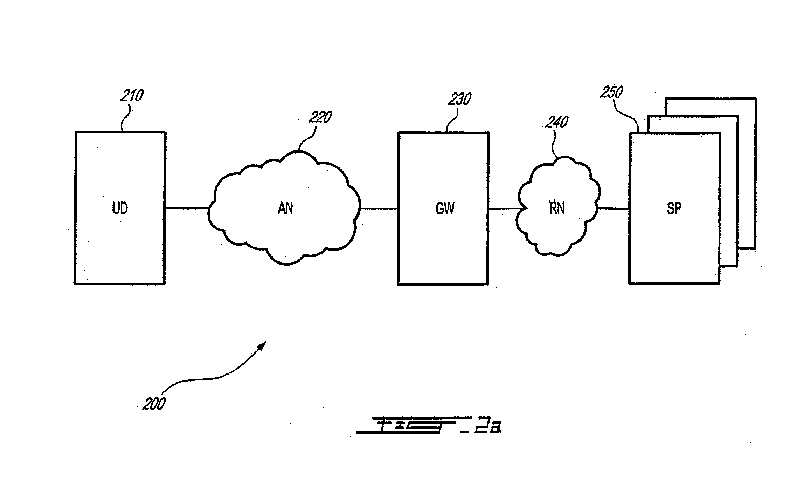

Reference is now made to the Drawings, in which Figure 2a shows an exemplary triple-play network 200 according to the present invention. The network comprises a user device (UD) 210, a gateway (GW) 230, one or more service providers (SP) 250, and may further comprise an access network (AN) 220 and a regional network (RN) 240. The UD 210 is provided with access to the SPs 250 through the GW 230 and, optionally, through the AN 220 and the RN 240. The AN 220 may comprise access nodes, routers, additional gateways, and the like. The RN 240 may also comprise routers and gateways. Alternatively, the UD 210 may be directly connected to the GW 230. In another embodiment, the GW 230 may connect directly to one or more of the SPs 250. A typical triple-play network such as the network 200 of Figure 2a would normally comprise tens or hundreds of GWs 230, each of which providing connectivity to a multiplicity of UDs 210. Distinct GWs 230 may connect a given UD 210 to distinct SPs 250. The network 200 would provide access to a large number of SPs 250, possibly distributed in a very large geographical area or worldwide. The triple-play network 200 of Figure 2a is thus greatly simplified for illustration purposes. The triple-play network 200 comprises added features of the UD 210 and GW 230, as per the teachings of the present invention, in support of the establishment of a multi-FIB architecture to define VLANs for connecting the UDs 210 with the SPs 250.

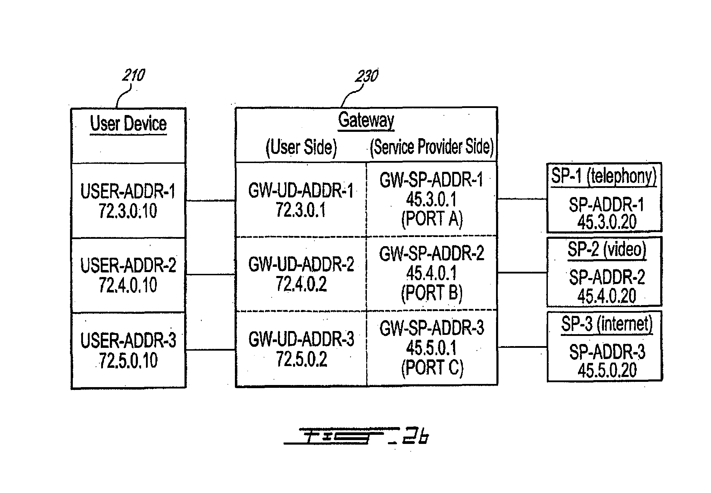

In order to enable setting up of a service received at the UD 210 from any one of the SPs, the UD 210 initiates a request for service which is sent through the GW 230 towards a selected SP. The selected SP allocates an IP address to the UD 210 and provides information about its own IP address. The SP and UD 210 IP addresses can then be used as source and destination addresses for exchanging data packets therebetween. Because this UD or other UDs may initiate several service requests, each SP having received a request for service allocates distinct IP addresses to each requesting UD. Each of the SPs also allocates two IP addresses to the GW 230, one of which is used in connecting the GW 230 towards any number of user devices such as UD 210, the other one being used in connecting the GW 230 towards the SPs. IP address information, comprising an address of the SP and the addresses allocated to the GW 230 and to the UD 210, is sent from the SP to the GWs 230, which in turn forwards the address information towards the UD 210. Between the GW 230 and a given SP, traffic is segregated using a logical µinterface of the GW 230. This logical interface is associated to a port of the GW 230. One logical interface is connected to one single SP. Figure 2b shows exemplary IP address associations according to the present invention. SP-1 has an IP address SP-ADDR-1 equal to 45.3.0.20. SP-1 allocates USER-ADDR-1 equal to 72.3.0.10 to UD 210. SP-1 also allocates GW-UD-ADDR-1 equal to 72.3.0.1 to GW 230 for supporting connections of the GW 230 towards various user devices. GW 230 has a logical interface towards SP-1 identified as Port A. SP-1 allocates GW-SP-ADDR-1 equal to 45.3.0.1 for connection of Port A towards SP-1. Theses addresses of the SP-1, GW 230 and UD 210 and the logical interface on Port A together allow the establishment of a route for sending packets, sometimes called datagrams, between the UD 210 and the SP-1. For example, the UD 210 may send a packet intended for SP-1 with 45.3.0.20 as a destination address and 72.3.0.10 as a source address, sending the packet on a port of the UD 210 connected towards an interface of the GW 230, addressable by use of 72.3.0.1. The GW 230 forwards the packet towards the SP by use of Port A connected thereto on address 45.3.0.1. As shown on Figure 2b, SP-2 allocates USER-ADDR-2 to the UD 210, and GW-UD-ADDR-2 and GW-SP-ADDR-2 to the GW 230, while SP-3 allocates USER-ADDR-3 to the UD 210, and GW-UD-ADDR-3 and GW-SP-ADDR-3 to the GW 230. Port B and Port C, respectively, are used to connect the GW 230 towards SP-2 and SP-3, using addresses GW-SP-ADDR-2 and GW-SP-ADDR-3, respectively. Of course, those skilled in the art will recognize that the hereinabove address values are exemplary and that any IP address, whether IP version 4 or IP version 6 addresses, in any range, could be used in the context of the present invention.

If more than one UD is connected to a same GW 230, each UD needs to acquire a distinct IP address from each of the SPs from which it receives service. The GW 230 only needs one IP address per logical interface for connecting any number of UDs to a same SP. For example, GW-UD-ADDR-1 is used for connecting any number of UDs to SP-1.

UD 210 may support services offered by several SPs at once. In a case where public IP addresses are used between UD 210 and all of the SPs, upon receiving a packet through the GW 230, from one of the SPs, verification of a destination address of the packet indicates whether the packet relates to a type of service offered by SP-1, SP-2 or SP-3 because it is one of theses SPs that has allocated the UD 210 IP address equal to the destination address. As a result, the UD 210 could, assuming no IP address collision, determine from the destination address whether the packet relates to the telephony service (SP-1), the video service (SP-2) or to basic Internet service (SP-3), and process it accordingly. For sending data towards the service providers, the UD 210 only needs to select as a destination address for a packet the address of the relevant SP, consistent with the type of service of interest for the packet.

The UD 210, the GW 230 and the SP-1 may form a private network in which addresses allocated by the SP-1 to the GW 230 and UD 210 are capable of routing data packets between these nodes because such addresses are unique within the private IP domain. Two distinct service providers might not be part of a same private network. As a result, two or more SPs might allocate the same private IP address to the same UD 210, resulting in confusion, that is a collision, between the addresses. Two or more SPs might also have the same IP address as their own addresses, meaning that, for example, SP-ADDR-2 and SP-ADDR-3 could have identical values. In another situation, a same address could be allocated to a UD by a first SP and be used by a second SP as its own address. These situations would result in conflicts of IP addresses, rendering impossible a conclusive determination of the type of service of interest for packets exchanged between the UD 210 and the various SPs. The multi-FIB architecture of the present invention, which will be described in relation with the following figures, solves any conflict between IP addresses by using additional tags added to each data packet exchange between the UD 210 and any SPs.

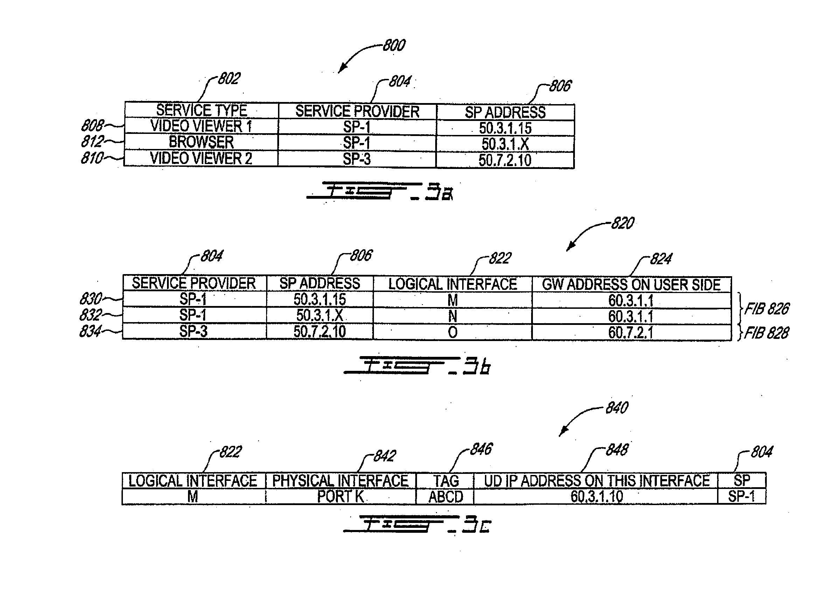

Reference is now made to Figures 3a, 3b and 3c which show, respectively, a service type to SP mapping table 800, a FIB table 820, and a routing table 840, the three tables being found within a user device. Some contents of the three tables are persistently stored in those tables, while other contents may be defined dynamically, as will be described below. The service type to SP mapping table 800 comprises service types 802, for example well-known Internet browsers, commercial video viewers, electronic mail client applications, Voice over IP (VoIP) clients, and the like. Each service type supported by the UD is usually mapped to at least one SP 804. A user of the UD may select, for example, to receive movies, newscast, and other types of video services using a same video application from more than one SP, as shown on rows 808 and 810, which both illustrate distinct service mappings. For each application mapped to one SP, an SP address 806 is stored in the mapping table 800, completing a service mapping 808, 810 or 812. The SP address 806 may be permanently stored in the mapping table 800, or may be obtained dynamically, for example by use of a Dynamic Host Configuration Protocol (DHCP), as is well known in the art. The SP address 806 may be obtained at the time of initial set up of a service session with the SP. The exemplary SP address 806 of service mapping 812 has a value of 50.3.1.x, meaning that a range of addresses, rather than one single address, may be used to connect to the SP for accessing its browser service. In the case of IP, the range of address is also known as a network address.

The UD stores one FIB for each SP in the FIB table 820. As shown on Figure 3b, FIB 826 is stored for SP-1 and FIB 828 is stored for SP-3, wherein SP-1 and SP3 are also found in the mapping table 800. The FIB table 820 reproduces for each service mapping the SP 804 and the SP address 806. The FIB table also comprises logical interfaces 822 for the UD, including one logical interface 822 per service offered by the SP 804. A combination of one FIB with one logical interface, forming a row 830, 832 or 834, actually represents one VLAN. An address of a GW 824, on which the UD can connect, is also part of the FIB. In many cases, the address of the GW 824 is obtained from the GW upon initial session set up.

To allow access to a service from a given SP, the UD builds the routing table 840. The routing table 840 reproduces the identity of a selected SP 804 and the logical interface 822 associated with a selected service type 802 offered by the selected SP 804. Additionally, a tag 846, which may sometimes be called a VLAN tag, and a physical interface 842 are added. The tag 846 may be generated by the UD or received from the GW. The UD may comprise one single physical interface used for all of its communication needs, for example a radio connection of a wireless terminal, or an Ethernet connection of a computer. Another UD may comprise several physical interfaces, for example a cellular radio interface and an infrared port, or various serial ports of a computer. The physical interface 842 of the routing table 840 is the actual interface used for communication with the given SP. An IP address 848 for use by the UD on the logical interface 822 is also part of the routing table 840. The UD IP address 848 is generally obtained from the SP 804, for example as a result of a service response received from the SP 804.

The tag 846 may take various forms and formats. For example, if communication between the UD and the GW is made by use of Ethernet, the tag 846 may be a VLAN tag added as a frame format extension to Ethernet frames, according to the Institute of Electrical and Electronics Engineers (IEEE) 802.3ac standard. For illustration purposes, the VLAN tag 846 is depicted as a 4-letter string representing 4 bytes as per the IEEE 802.3ac standard. Other manners of defining a logical group comprising the UD and an SP may also be used, especially where communication between the UD and GW is made by transport mechanisms other than Ethernet. The term VLAN tag, defined for Ethernet networks in the general literature, is used for simplicity even though other transport media may be used and, consequently, tags having different formats may also be used.

When a user desires to get access to a service, he/she selects the service type and, if there is more than one SP for the service, the user also selects the actual SP. For example, the user selects the combination exemplified as the service mapping 808 of the mapping table 800 of Figure 3a, for receiving a video service from SP-1. For the video service, the SP address 806 of the SP-1 is 50.3.1.15. This SP address 806 may be known a priori, of may be entered in the mapping table 800 later, following receipt of a service response from the SP-1. This selection of the SP-1 and of the service type leads the UD to point to the FIB 826 of Figure 3b, because this FIB is defined for connection with SP-1. Two distinct rows, or VLANs, within the FIB 826 can be addressed by use of distinct IP addresses of the SP-1. The address 50.3.1.15 leads to selecting the row 830 having the logical interface 822 equal to 'M'. In turn, the logical interface 822 equal to 'M' is mapped on the routing table 840 of Figure 3c to a physical interface 842 identifying PORT 'K', a VLAN tag 846 equal to 'ABCD', and IP address 848 equal to 60.3.1.10, allocated to the UD by SP-1, this allocation being made either initially or following the initial session set up. The UD can now exchange packets with SP-1 using 60.3.1.10 as its own address, 50.3.1.15 as the SP-1 address, connecting by use of PORT 'K' through a GW by use of the GW address 824 equal to 60.3.1.1, further adding the VLAN tag 846 equal to 'ABCD' to each packet. In case another SP has allocated the same IP address, also equal to 60.3.1.10, to this UD, the data packets can be differentiated by use of a different tag found in packets exchanged with that other SP.

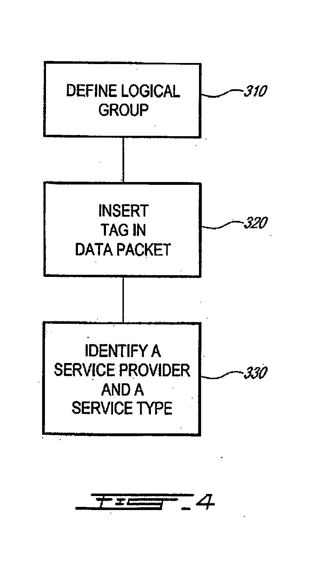

In order to describe how the GW 230, the SP 250 and the UD 210 of Figure 2a cooperate to establish and use the VLANs and the service mappings, reference is now made to Figure 4, which shows a method of exchanging data packets between a user device and one of a plurality of service providers according to an aspect of the present invention. One given UD 210 has made a request to obtain a selected service type from one selected SP 250, the request having transited through the GW 230. The SP 250 has allocated addresses, for example IP addresses, to the UD 210 and to the GW 230.

The method starts at step 310, where a logical group is established to identify the UD 210 acquiring the service and the SP 250 providing that service. The logical group, which is defined to relate the UD 210 with the SP 250, comprises a service mapping, an associated tag, and a FIB. The service mapping comprises a service type offered to the UD 210 by the SP 250, an identity of the SP 250, and an address of the SP 250. The FIB comprises the address of the SP 250, the address allocated to the UD 210 by the SP 250, an address allocated to the GW 230 for connecting towards the UD 210 and an identification of a logical interface of the UD 210. The GW 230 informs the UD 210 of the addresses contained in the FIB. At the same time, the tag is created, either by the UD 210 or the GW 230 and the one of these nodes that creates it informs the other node. At step 320, a data packet is being exchanged between the UD 210 and the SP 250, the data packet transiting through the GW 230. The data packet may be an upstream packet originated from the UD 210, to be sent towards the SP 250. Alternatively, the data packet may be a downstream packet originated from the SP 250, arriving at the GW 230 to be forwarded towards the UD 210. The tag identifying the logical group is added to the data packet, either by the UD 210 for the upstream packet, or by the GW 230 for the downstream packet, thereby providing an indication of the service mapping within the data packet. Preferably, the tag is a VLAN tag inserted in a Media Access Control (MAC) layer of data frames exchanged between the UD 210 and GW 230. At step 330, the tag is extracted from a data frame by a receiving point, either the UD 210, if this is a downstream packet, or the GW 230, if this is an upstream packet. By use of tag, the receiving point can identify to which service type and SP 250 the data packet relates, even when distinct SPs defined in distinct logical groups share identical addresses or when distinct SPs defined in distinct logical groups have allocated identical addresses to the UD 210.

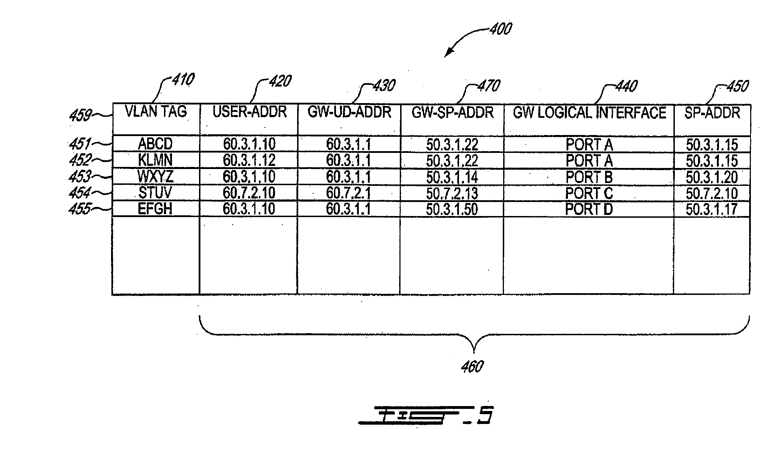

Figure 5 shows an exemplary content of a multi-FIB table 400 according to some aspects of the present invention. The multi-FIB table 400 is designed to overcome address collisions. IP addresses are shown in the exemplary embodiment of Figure 5, but the present invention could also advantageously apply where other address types are used, for example telephone numbers, uniform resource locators (URL), session description protocol (SDP) conference numbers, asynchronous transfer mode (ATM) addresses, internetwork packet exchange (IPX) addresses, and the like. Because the IP addresses allocated by the SPs to the UDs and to the GWs may be private, they may not be unique. Thus, address collisions, defined as the allocation of a same address value to two distinct entities, may occur. The multi-FIB table 400 is preferably generated by and stored in the GW. The exemplary multi-FIB table 400 comprises the following columns: A first column comprises the VLAN tags 410. A second column comprises IP addresses, identified herein as USER-ADDR 420, allocated by the SPs to UDs. A third column comprises addresses, identified herein as GW-UD-ADDR 430, allocated by the SPs to the GW, for communication between the GW and UDs. A fourth column comprises more addresses, identified as GW-SP-ADDR 470, allocated by the SPs to the GW, for communication between the GW and the SPs. A fifth column comprises logical interfaces 440 of the GW, in the form of port identities, for connection of the GW towards the SPs. A sixth column lists addresses of the SPs, identified herein as SP-ADDR 450. In case where the GW-SP-ADDR 470 and the SP-ADDR 450 are public IP addresses, the logical interface 440 may be omitted. The format of the addresses can be according to well known Internet Protocol version 4 (IPv4) or Internet Protocol version 6 (IPv6) standards. Other address types besides IP addresses could also be used. The format of the VLAN tag may be according to the IEEE 802.3ac standard, or may take any other form that uniquely identifies, from the standpoint of the GW, a relationship between a given UD and a given SP.

Each row of the VLAN table 400, apart from a header row 459, identifies an actual VLAN, as seen from the standpoint of the GW. One VLAN comprises one VLAN tag 410 and one FIB 460, the FIB 460 comprising one USER-ADDR 420, one GW-UD-ADDR 430, one GW-SP-ADDR 470, one logical interface 440, and one SP-ADDR 450. While only a few rows are shown, the multi-FIB table 400 would normally comprise a much larger number of rows, for example thousands of rows. Row 451 illustrates a VLAN defined for a first UD in communication with one SP. The SP has an SP-ADDR 450 equal to 50.3.1.5. The GW is connected towards the SP by use of Port A. The SP allocates IP addresses to the GW and to the first UD upon initial session set up. The GW obtains a GW-UD-ADDR 430 equal to 60.3.1.1 and a GW-SP-ADDR 460 equal to 50.3.1.22, while the first UD obtains a USER-ADDR 420 equal to 60.3.1.10. A VLAN tag 410 is allocated to uniquely identify the VLAN. The VLAN tag 410 as illustrated has a value 'ABCD'.

Row 452 illustrates another VLAN that relates to a second UD acquiring service from the same SP as depicted in row 451, through the same GW. As such, the SP-ADDR 450 of the SP, on row 452, has the same value as on row 451, which is 50.3.1.15. Because the same relationship exists between the SP and the GW, the GW-UD-ADDR 430 and the GW-SP-ADDR 470 values are the same in row 452 as in row 451, and Port A is also used to connect the GW to the SP. That same SP normally allocates a distinct private IP address to this second UD, so the USER-ADDR 420 value of row 452 is different from that of row 451. A VLAN tag 410 equal to 'KLMN' is assigned to the VLAN of row 452.

As an example of how the multi-FIB table 400 may be used to overcome IP address collisions, a third UD acquires service from another SP. In the example of row 453, that other SP allocates to the GW a GW-UD-ADDR 430 which collides with the GW-UD-ADDR 430 allocated in rows 451 and 452. The collision between the GW-UD-ADDR 430 values is overcome by the fact that a distinct logical interface 440, Port B, and a distinct GW-SP-ADDR 470 equal to 50.3.11.14, are used to connect the GW to that SP in the example of Figure 5. The SP allocates to the third UD a USER-ADDR 420 which also collides with the USER-ADDR 420 of row 451. A VLAN tag 410 equal to 'WXYZ' is however allocated to the VLAN of row 453. The two FIBs 460 of rows 451 and 453 comprise identical GW-UD-ADDR 430 allocated to the same GW for connection of UDs with two distinct SPs, using distinct ports. These two FIBs 460 further comprise identical IP addresses 420 allocated to distinct UDs. However, distinct VLAN tags 410 allow to fully distinguish the two VLANs. When an upstream packet arrives at the GW, with a source IP address equal to the USER-ADDR 420 of 60.3.1.10, the GW can readily identify the third UD, separate from the first UD, despite their use of identical IP addresses, by use the VLAN tag 410 equal to 'WXYZ' included in the upstream packet.

As another example of how the multi-FIB table 400 may be used to overcome IP address collisions, the first UD, after having acquired service from one SP, resulting in the setup of the VLAN of row 451, acquires service from another SP. That other SP has an IP address equal to 50.3.1.17. A VLAN is created on row 455, where the IP address of the SP is stored as SP-ADDR 450. The SP allocates the GW-UD-ADDR 430 equal to 60.3.1.1 and the GW-SP-ADDR 470 equal to 50.3.1.50 to the GW, which in turn selects Port D, and USER-ADDR 420 equal to 60.3.1.10 to the first UD; these addresses and port are also stored on row 455. In this example, the same UD has been allocated the same IP address value from two distinct SPs, as shown on rows 451 and 455. Without the benefit of the present invention, the first UD might confuse an incoming downstream packet because it would not know which service it is related to. A VLAN tag 410 equal to 'EFGH' is added to the VLAN of row 455. As per the present invention, when a downstream packet arrives at the GW 430 from one of the SPs, the GW 430 adds the VLAN tag 410, with a value of 'ABCD' or 'EFGH', which relates this first UD to the SP from which the packet originates. The packet is forwarded towards the UD, now comprising the VLAN tag 410. The UD uses the VLAN tag 410 present in the incoming downstream packet to identify the originating SP, thereby also identifying the type of service that the packet relates to.

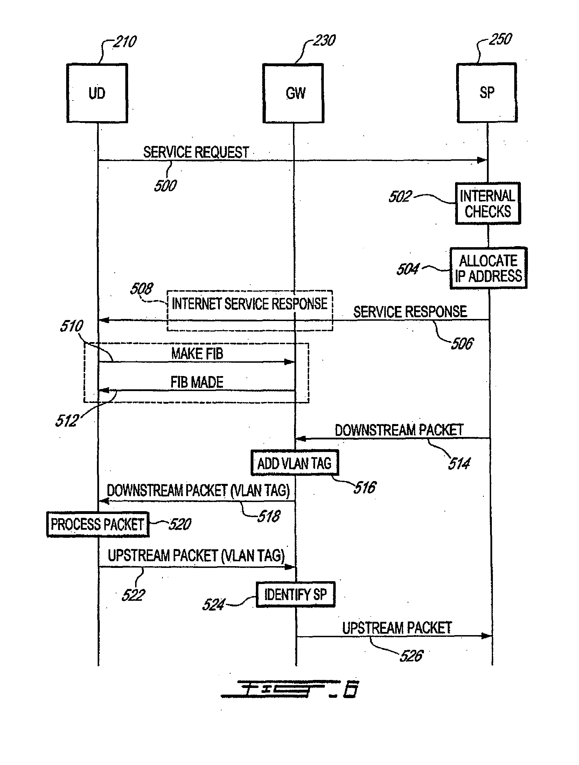

A complete service set up will now be described by reference to Figure 6, which is a sequence diagram showing an exchange of data packets between a user device and a service provider according to other aspects of the present invention. The events shown in Figure 6 involve the nodes of the triple-play network 200 of Figure 2a. The AN 220 and the RN 240 of Figure 2a forward messages and packets transparently, and are thus not shown on Figure 6. The process starts at step 500 where a UD 210 sends a service request towards a selected SP 250, usually following a user command, requesting the set up of a service session. Selection of the SP 250 is made at least in part according to the type of service selected by the user, as discussed in the foregoing description of Figures 3a, 3b and 3c. The UD 210 has a virtual router protocol stack capable of handling the type of service indicated in the service request. The service request usually transits through the GW 230, but this may happen in a transparent fashion. At step 502, the SP 250 runs internal checks to verify that the UD 210 is authorized to access the service, that resources are available, etc. At step 504, the SP 250 allocates an IP address to the UD 210 and two IP addresses to the GW 230, as described in relation to the multi-FIB table 400 of Figure 5. Allocation of the IP addresses to the GW 230 may not be necessary if the same GW 230 is already involved in a service session between another UD and the same SP 250, in which case it already has IP addresses assigned by the SP 250. At step 506, the SP 250 sends the IP addresses allocated to the UD 210 and to the GW 230, as a part of a service response, along with its own IP address.

In order to populate the multi-FIB table 400 of Figure 5, the GW 230 may intercept the service response at step 508. In this case, the GW 230 stores a FIB 460 content for the service session. The IP address assigned to the UD 210 is stored in column 420, the IP addresses assigned to the GW 230 are stored in columns 430 and 470, a port for communication between the GW 230 and the SP 250 is identified and stored in column 440, and the IP address of the SP 250 is stored in column 450, all on a same row. The GW 230 may also assign a unique VLAN tag in column 410 of the same row, thereby completing a VLAN for the service session. The GW 230 then forwards the service response towards the UD 210, having added the VLAN tag within the service response, if created by the GW 230. Alternatively to step 508, the service response of step 506 may pass transparently through the GW 230. In such a case, the UD 210 further sends at step 510 towards the GW 230 a request to make the FIB 460, the request comprising the IP addresses and a VLAN tag generated by the UD 210. The GW 230 replies at step 512 with an indication that the FIB 460 was made. The sequence of steps 500-512 could be somewhat modified, for instance by having the UD 210 generate the VLAN tag and inserting it in the service request at step 500. In that case, the GW 230 would preferably store the VLAN tag prior to forwarding the service request towards the SP 250. The exact sequence of steps 500-512 may thus vary in details without departing from the spirit of the present invention.

The same or other UDs may set up service sessions with the same or other SPs, in the same manner as described hereinabove. Such other events are not shown on Figure 6, but would lead to the creation of more VLANs on the multi-FIB table 400 of Figure 5.

At step 514, the SP 250 sends a data packet in the downstream direction towards the UD 210, through the GW 230. In addition to payload related to the service type offered by the SP 250, the packet comprises a source address equal to the own IP address of the SP 250, and a destination address equal to the IP address that the SP 250 has assigned to the UD 210. The downstream packet is sent on a route comprising the IP address assigned by the SP 250 to the GW 230 for communication therebetween, arriving at the logical interface, or port, selected by the GW 230 to communicate with the SP 250. At step 516, the GW 230 selects a VLAN from the multi-FIB table 400 by matching the logical interface on which the downstream packet is received, and the source and destination IP addresses, with the FIB 460 content of a row within the multi-FIB table 400. The GW 230 adds the VLAN tag from the matched row to the downstream packet. At step 518, the downstream packet is forwarded from the GW 230 towards the UD 210. At step 520, the UD 210 processes the packet by using the VLAN tag to identify the SP 250 and to internally route the packet to a virtual router protocol stack adapted to handle the selected type of service before extracting the payload. The VLAN tag is used to locate the routing table 840 of Figure 3c, thereby pointing to the VLAN and FIB of the FIB table 820 of figure 3b, and further to the proper service mapping of the mapping table 800 of Figure 3a. The service type 802 is identified in the table 800 so the payload can be handled by the proper virtual router protocol stack.

There may be events where the UD 210 enjoys two concurrent services of a same type from two distinct SPs 250. For example, there may be a case where the UD 210 actually comprises two IPTV receivers, each receiver having its own virtual stack, for concurrently receiving two separate video programs. The UD 210 can, by use of the VLAN tag, fully distinguish the two service offerings and properly route each packet to the proper virtual stack based on the service type and on the identity of the SP 250.

Even though two distinct UDs 210 may have been allocated identical IP addresses by distinct SPs 250, which would have been specified as destination addresses in downstream packets received from the SPs 250, the GW 230 would have correctly identified the proper VLAN from its multi-FIB table 400 at step 516 by use of the logical interface having received the downstream packet along with the source and destination IP addresses. Likewise, in a case where the same UD 210 would have been allocated identical IP addresses by two distinct SPs 250, the UD 210 would have been capable of relating the payload of the downstream packet to the proper service session at step 520 by use of the VLAN tag.

At step 522, the UD 210 sends an upstream packet towards the GW 230, intended for the SP 250. This upstream packet comprises the VLAN tag that relates to the service session that the UD 210 is having with this specific SP 250. Specifically, the VLAN tag provides an indication of which virtual router protocol stack the UD 210 is using for sending the upstream packet. At step 524, the GW 230 uses the VLAN tag to identify the proper VLAN in the multi-FIB table 400, thereby ensuring that the upstream packet is forwarded towards the proper SP 250, even in the case where two distinct UDs 210 share the same private IP address.

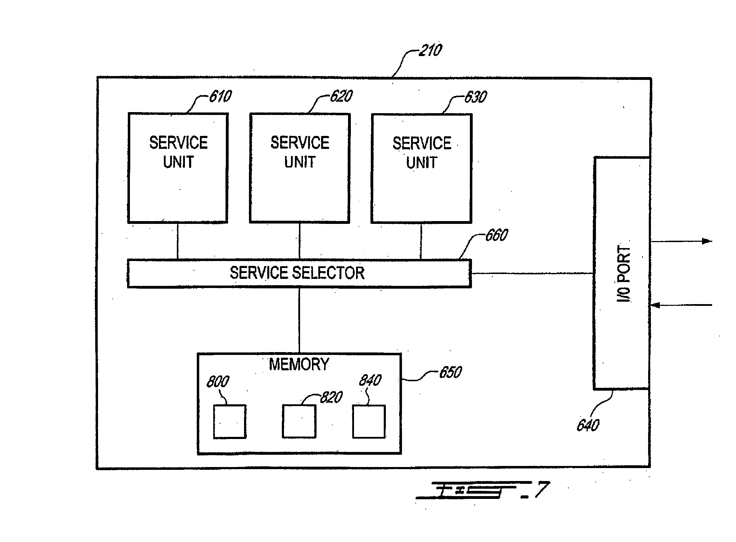

An exemplary construction of a user device as used in the preceding figures will now be described by reference to Figure 7, which shows an exemplary user device built according to the present invention. The exemplary UD comprises three service units identified as service units 610, 620 and 630, which could for example be used, respectively, for VoIP, IPTV and general Internet applications. Those skilled in the art will readily recognize that the UD could comprise any number of service units and could be adapted to handle any kind of application and any type of payload of interest for various types of devices. The service units 610, 620 and 630 each implement a virtual router protocol stack for a type of service that they implement. The UD further comprises an input/output (I/O) port 640, a memory 650 and a service selector 660. The memory 650 stores the mapping table 800, the FIB table 820, and the routing table 840 of Figures 3a, 3b and 3c. The memory 650 is a non-volatile memory, or persistent memory, that can be electrically erased and reprogrammed and that may be implemented, for example, as a flash memory or as a data storage module.

The I/O port 640, which in some embodiments comprises two distinct ports for receiving and for transmitting signals, communicates with the SPs through the GW, possibly through the AN 220. The I/O port 640 may support various types of physical connections, such as cellular radio, WLAN, Bluetooth™, coaxial cable, twisted copper pair, category 5 cable, and the like. The I/O port 640 supports packet communication, for example sending and receiving of IP datagrams.

When a user of the UD desires to initiate a service session for a given service type, with a selected SP, he/she enters a command on a user interface (not shown). The user interface invokes the relevant service unit 610, 620 or 640, which formats a service request message and forwards it to the service selector 660. The service selector 660 then consults the mapping table 800, in the memory 650, using the selected SP to read from the list of SP identities 804 and using the selected service type to read from the list of service types 802, thereby choosing one service mapping. In some cases, only one SP is known by the UD to support a given service type; in such cases, the user would only select the given service type and would not need to select the SP because the service type would be unique within one service mapping of the mapping table 800. The service selector 660 requests the I/O port 640 to send the service request comprising both indications of the selected SP and of the requested service type. The manner in which the service request arrives at the SP, possibly involving address resolution of the SP as is well-known in the art, is outside the scope of the present invention. The I/O port 640 then receives a service response comprising address information for the service session and optionally comprising a VLAN tag, if the VLAN tag is defined by the GW. The I/O port 640 forwards the service response to the service selector 660. If not received from the GW, the service selector 660 may autonomously generate the VLAN tag. The received address information comprises an address of the SP that the service selector 660 stores in the mapping table 800 and in the FIB table 820. The address information also comprises an address of the GW that the service selector 660 stores in the FIB table 820. The address information further comprises an address allocated by the SP to the UD, which the service selector 660 stores in the routing table 840 as UD IP address 848. Finally, the service selector 660 defines a value for a logical interface 822 that is used to link the routing table 840 and the VLAN identified by the row of the FIB table 820 wherein the SP address 806 and GW address 824 are stored for the present service session. Of course, there is only one service mapping in the mapping table 800 that matches the service provider identity 804 and address 806 related to the logical interface 822. The service selector 660 also informs the appropriate service unit 610, 620 or 630, depending on which is capable of handling the service type, of IP addresses contained in the FIB and of any content of the service response that may be suitable for establishing the service session.

When a downstream data packet arrives at the I/O port 640, the I/O port 640 forwards the packet to the service selector 660. The service selector extracts the VLAN tag from the packet and uses it as a pointer in the routing table 840 of the memory 650 to read the logical interface 822, which in turn links to the FIB of the FIB table 820, providing the SP address 806 and SP identity 804. The service selector 660 then reads the service type 802, in the relevant service mapping of the mapping table 800, by use of the SP address 806 and SP identity 804. By considering the VLAN tag from the packet in addition to any source address, destination address and port information comprised in the packet, the service selector 660 actually realizes a multi-FIB implementation whereby one of the virtual router protocol stacks implemented in the service units 610, 620 and 630 is selected by use of the VLAN tag value. Having obtained the service type from the memory 650 by use of the VLAN tag, the service selector 660 forwards any payload comprised in the packet to the appropriate service unit 610, 620 or 630, according to the service type and service provider identity.

When one of the service units 610, 620 or 630 has data to send towards the SP with which it has an ongoing service session, the service unit prepares a payload, comprising indications of the SP identity and of the service type for the session, and sends it to the service selector 660. The service selector 660 uses the service type 802 and the SP identity 804 as pointers to read from the memory 650 the service mapping, leading to the VLAN in the FIB, further to the logical interface, and then to the VLAN tag. The service selector 660 then adds the VLAN tag to the payload to form a complete upstream packet and requests the I/O port 640 to send it towards the SP.

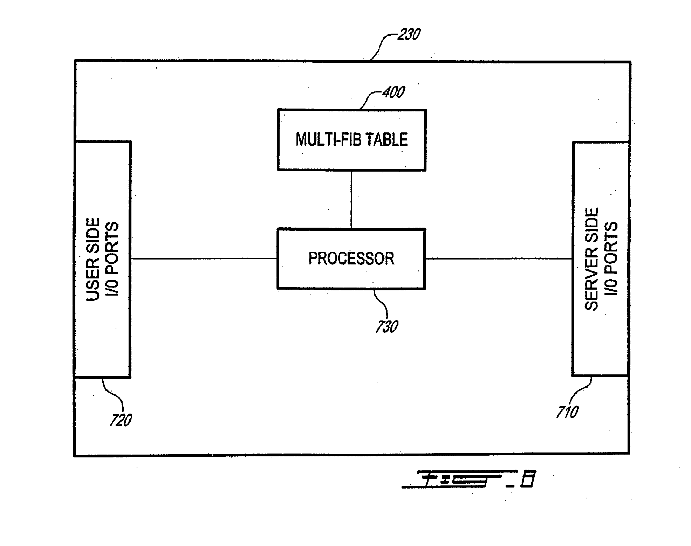

An exemplary construction of a gateway as used in the preceding figures will now be described by reference to Figure 8, which shows an exemplary gateway used to support the present invention. The GW comprises ports for communicating on one hand with SPs, and on the other hand with UDs. Depending on the underlying transport technology and on the presence of the AN 220 or RN 240, there may be a number of distinct physical ports connecting the GW with each SP or with each UD. Alternatively, a given physical port may multiplex data streams exchanged between the GW and several SPs or UDs, in support of a number of logical ports. The GW of Figure 8 thus comprises a number of user side I/O ports 720 and a number of server side I/O ports 710, these various I/O ports being either physical or logical ports. The user side I/ O ports 720 connect the GW towards the UDs while the server side I/O ports 710 connect the GW towards the SPs. The GW also comprises a processor 730 and the multi-FIB table 400 introduced in the foregoing description of Figure 5.

The processor 730 uses information contained, for example, in service response messages received at the server side I/O ports 710, to populate the content of a row in the multi-FIB table 400. The service response is received on a specific physical or logical port, which is stored in the multi-FIB table 400 as the GW logical interface 440. The service response comprises a source address which is stored as the SP-ADDR 450, a destination address which is stored as the USER-ADDR 420, and addresses assigned to the GW 240 by the SP as the GW-UD-ADDR 430 and as the GW-SP-ADDR 470, all on the same row. The GW-UD-ADDR 430 is linked to the user side I/O port 720 and the GW-SP-ADDR 470 is linked to the server side I/O point 710, these ports being used for a service session to which relates the service response. The processor 730 may also generate a VLAN tag, which is preferably unique within the GW, and store it as the VLAN tag 410 in the multi-FIB table 400. Having stored definitional relevant addresses and optionally the VLAN tag 410 in the row of the multi-FIB table 430, the processor 730 adds the VLAN tag to the service response content and requests the user side I/O ports 720 to forward the service response towards the UD. If no VLAN tag 410 was defined by the GW, a value for storing as the VLAN tag 410 may be received from the UD on the user side I/O ports 720 and stored in the multi-FIB table 400.

When a downstream data packet related to the service session arrives as the server side I/O ports 710, on a specific physical or logical port, the processor 730 matches the specific physical or logical port with the content of the multi-FIB table 400 to locate the row containing the VLAN definition for the session. Because there may be multiple rows in the multi-FIB table 400 having the same logical interface 440, source and destination addresses contained in the downstream data packet may further be used to uniquely identify the row that contains the proper VLAN definition. The processor 730 adds the VLAN tag 410 from that row to the downstream data packet and requests the user side I/O ports 720 to forward it towards the UD. When an upstream data packet arrives as the user side I/O ports 720, the processor 730 extracts from the packet a VLAN tag and uses it to match with a row containing a VLAN tag 410 with the same value. The processor thereby identifies the FIB of interest, comprising the GW logical interface 400, and requests the service side I/O ports 710 to forward the upstream data packet by use of the GW logical interface 400.

Although several aspects of the preferred embodiment of the method and of the user device of the present invention have been illustrated in the accompanying Drawings and described in the foregoing Detailed Description, it will be understood that the invention is not limited to the embodiment disclosed, but is capable of numerous rearrangements, modifications and substitutions.

## Claims

1. A method of exchanging data packets between a user device and a plurality of service providers, the method comprising the steps of:
- defining in the user device (210) at least two forwarding information bases FIB, each FIB comprising an identity and an internet protocol IP address of a corresponding service provider (250) each FIB being associated with at least one service type, with a corresponding IP address allocated to the user device (210) by the corresponding service provider (250), and with a corresponding tag;
- receiving a data packet at the user device (210);
- extracting a received tag from the data packet;
- using the received tag to identify a given service provider (250) and a given service type corresponding to the data packet; and
- processing the data packet according to the given service provider (250) and according to the given service type.

2. The method of claim 1, wherein:
- a first one of the at least two FIBs is associated with a first IP address allocated to the user device (210) by a first service provider (250);
- a second one of the at least two FIBs is associated with a second IP address allocated to the user device (210) by a second service provider (250) and
- the first and the second IP addresses allocated to the user device (210) are equal.

3. The method of claim 1, wherein:
- one of the at least two FIBs corresponds to the given service provider (250);
- the one of the at least two FIBs comprises a first virtual local area network VLAN; and
- the first VLAN comprises the user device (210) the given service type and the given service provider (250).

4. The method of claim 3, wherein:
- the one of the at least two FIBs further comprises a second VLAN; and
- the second VLAN comprises another service type.

5. The method of claim 1, wherein:
- an IP address of the given service provider and an IP address allocated to the user device (210) by the given service provider (250) are used as a source address and as a destination address in data packets exchanged between the user device (210) and the given service provider (250)

6. A user device (210) for exchanging data packets with a plurality of service providers (250) comprising:
- an input/output I/O port adapted to receive data packets from the service providers (250).
- two or more service units adapted to process the data packets, wherein each service unit supports at least one service type;
- a memory adapted to store at least two forwarding information bases FIB, each FIB comprising an identity and an internet protocol IP address of a corresponding service provider (250) each FIB being associated with at least one service type, with a corresponding IP address allocated to the user device (210) by the corresponding service provider (250) and with a corresponding tag; and
- a service selector adapted to retrieve a given tag from a received data packet, to read from the memory a given service type and an identity of a given service provider (250) by use of the given tag, and to forward the received data packet towards one of the two or more service units based on the given service type and on the identity of the given service provider (250)

7. The user device (210) of claim 6, wherein:
the I/O port is further adapted to send data packets towards the given service provider (250).

8. The user device (210) claim 7, wherein:
- the two or more service units are each further adapted to produce an upstream data packet and to provide an indication of the given service type and of the identity of the given service provider (250) and
- the service selector is further adapted to read from the memory the given tag by use of the indication of the given service type and of the identity of the given service provider (250) to insert the given tag in the upstream data packet, and to request the I/O port to send the upstream data packet towards the given service provider (250).

9. The user device (210) of claim 6, wherein:
- the I/O port is further adapted to receive from the given service provider (250) a service response comprising an IP address allocated to the user devices (210) and an IP address of the given service provider (250), and
- the memory is further adapted to store, in relation with the given tag, the IP addresses received in the service response.

## Patentansprüche

1. Verfahren zum Austausch von Datenpaketen zwischen einer Nutzervorrichtung und einer Vielzahl von Dienstanbietern, wobei das Verfahren die Schritte umfasst zum:
Definieren in der Nutzervorrichtung (210) zumindest zweier Weitergabe-Informationsbasen FIB, wobei jede FIB eine Identität und eine Internetprotokoll-Adresse bzw. IP-Adresse eines entsprechenden Dienstanbieters (250) umfasst, wobei jede FIB mit zumindest einem Diensttyp assoziiert ist, mit einer entsprechenden IP-Adresse, die der Nutzervorrichtung (210) durch den entsprechenden Dienstanbieter (250) zugewiesen wird, und mit einem entsprechenden Tag;
Empfangen eines Datenpaktes an der Nutzervorrichtung (210);
Extrahieren eines empfangenen Tags aus dem Datenpaket;
Verwenden des empfangenen Tags zur Identifikation eines bestimmten Dienstanbieters (250) und eines bestimmten, dem Datenpakt entsprechenden Diensttyps; und
Verarbeiten des Datenpakets gemäß dem bestimmten Dienstanbieters (250) und gemäß dem bestimmten Diensttyp.

2. Verfahren nach Anspruch 1, wobei:
eine erste der zumindest zwei FIB mit einer ersten IP-Adresse assoziiert wird, die der Nutzervorrichtung (210) durch einen ersten Dienstanbieter (250) zugewiesen wird;
eine zweite der zumindest zwei FIB mit einer zweiten IP-Adresse assoziiert wird, die der Nutzervorrichtung (210) durch einen zweiten Dienstanbieter (250) zugewiesen wird; und
die erste und die zweite IP-Adresse, die der Nutzervorrichtung (210) zugewiesen werden, gleich sind.

3. Verfahren nach Anspruch 1, wobei:
eine der zumindest zwei FIB dem bestimmten Dienstanbieter (250) entspricht;
die eine der zumindest zwei FIB ein erstes virtuelles lokales Netzwerk VLAN umfasst; und
das erste VLAN die Nutzervorrichtung (210), den bestimmten Diensttyp und den bestimmten Dienstanbieter (250) umfasst.

4. Verfahren nach Anspruch 3, wobei:
die eine der zumindest zwei FIB ferner ein zweites VLAN umfasst; und
das zweite VLAN einen anderen Diensttyp umfasst.

5. Verfahren nach Anspruch 1, wobei:
eine IP-Adresse des bestimmten Dienstanbieters und eine IP-Adresse, die der Nutzervorrichtung (210) durch den bestimmten Dienstanbieter (250) zugewiesen wurde, in Datenpaketen, die zwischen der Nutzervorrichtung (210) und dem bestimmten Dienstanbieter (250) ausgetauscht werden, als eine Quellenadresse und als eine Zieladresse verwendet werden.

6. Nutzervorrichtung (210) zum Austausch von Datenpaketen mit einer Vielzahl von Dienstanbietern (250), mit:
einem Eingabe/Ausgabe-Anschluss bzw. I/O-Anschluss, ausgelegt zum Empfangen von Datenpaketen von den Dienstanbietern (250);
zwei oder mehr Diensteinheiten, ausgelegt zum Verarbeiten der Datenpakete, wobei jede Diensteinheit zumindest einen Diensttyp unterstützt;
eine Speichereinheit, ausgelegt zum Speichern zumindest zweier Weitergabe-Informationsbasen FIB, wobei jede FIB eine Identität und eine Internetprotokoll-Adresse bzw. eine IP-Adresse eines entsprechenden Dienstanbieters (250) umfasst, wobei jede FIB assoziiert ist mit zumindest einem Diensttyp, mit einer entsprechenden IP-Adresse, die der Nutzervorrichtung (210) durch den entsprechenden Dienstanbieter (250) zugewiesen wird, und mit einem entsprechenden Tag; und
einer Dienstauswahleinheit, ausgelegt zum Aufrufen eines bestimmten Tags aus einem empfangenen Datenpaket, um aus der Speichereinheit einen bestimmten Diensttyp und eine Identität eines bestimmten Dienstanbieters (250) unter Verwendung des Tags zu lesen, und zum Weitergeben des empfangenen Datenpakets zu einer der zwei oder mehr Diensteinheiten auf Grundlage des bestimmten Diensttyps und der Identität des bestimmten Dienstanbieters (250).

7. Nutzervorrichtung (210) nach Anspruch 6, wobei:
der I/O-Anschluss ferner ausgelegt ist zum Senden von Datenpaketen zu dem bestimmten Dienstanbieter (250).

8. Nutzervorrichtung (210) nach Anspruch 7, wobei:
die zwei oder mehr Diensteinheiten jeweils ferner ausgelegt sind zum Erzeugen eines Aufwärtsstrecken-Datenpakets und zur Bereitstellung einer Anzeige des bestimmten Diensttyps und der Identität des bestimmten Dienstanbieters (250); und
die Dienstauswahleinheit ferner ausgelegt ist zum Lesen des bestimmten Tags aus der Speichereinheit, unter Verwendung der Anzeige des bestimmten Diensttyps und der Identität des bestimmten Dienstanbieters (250), um das bestimmte Tag in das Aufwärtsstrecken-Datenpaket einzufügen, und zum Anfordern des I/O-Anschlusses, das Aufwärtsstrecken-Datenpaket zu dem bestimmten Dienstanbieter (250) zu senden.

9. Nutzervorrichtung (210) nach Anspruch 6, wobei:
der I/O-Anschluss ferner ausgelegt ist zum Empfang einer Dienstantwort von dem bestimmten Dienstanbieter (250) mit einer IP-Adresse, die der Nutzervorrichtung (210) zugewiesen wird, und einer IP-Adresse des bestimmten Dienstanbieters (250); und
die Speichereinheit ferner ausgelegt ist zum Speichern, in Beziehung mit dem bestimmten Tag, der in der Dienstantwort empfangenen IP-Adressen.

## Revendications

1. Procédé d'échange de paquets de données entre un dispositif utilisateur et une pluralité de fournisseurs de services, le procédé comprenant les étapes consistant à :
- définir, dans le dispositif utilisateur (210) au moins deux bases d'informations de réexpédition FIB (pour Forwarding Information Base), chaque FIB comprenant une identité et une adresse de protocole Internet IP (pour Internet Protocol) d'un fournisseur de services correspondant (250), chaque FIB étant associée à au moins un type de service, à une adresse IP correspondante allouée au dispositif utilisateur (210) par le fournisseur de services correspondant (250), et à une balise correspondante ;
- recevoir un paquet de données sur le dispositif utilisateur (210) ;
- extraire une balise reçue du paquet de données ;
- utiliser la balise reçue pour identifier un fournisseur de services (210) donné et un type de service donné correspondant au paquet de données ; et
- traiter le paquet de données en fonction du fournisseur de services (250) donné et en fonction du type de service donné.

2. Procédé selon la revendication 1, dans lequel :
- une première des au moins deux FIB est associée à une première adresse IP allouée au dispositif utilisateur (210) par un premier fournisseur de services (250) ;
- une seconde des au moins deux FIB est associée à une seconde adresse IP allouée au dispositif utilisateur (210) par un second fournisseur de services (250) ; et
- les première et seconde adresses IP allouées au dispositif utilisateur (210) sont égales.

3. Procédé selon la revendication 1, dans lequel :
- l'une des au moins deux FIB correspond au fournisseur de services (210) donné
- ladite une des au moins deux FIB comprend un premier réseau local virtuel VLAN (pour Virtual Local Area Network) ; et
- le premier VLAN comprend le dispositif utilisateur (210), le type de service donné et le fournisseur de services (250) donné.

4. Procédé selon la revendication 3, dans lequel :
- ladite une des au moins deux FIB comprend en outre un second VLAN ; et
- le second VLAN comprend un autre type de service.

5. Procédé selon la revendication 1, dans lequel :
- une adresse IP du fournisseur de services donné et une adresse IP allouée au dispositif utilisateur (210) par le fournisseur de services (250) donné sont utilisées en tant qu'adresse source et qu'adresse de destination dans des paquets de données échangés entre le dispositif utilisateur (210) et le fournisseur de services (250) donné.

6. Dispositif utilisateur (210) destiné à échanger des paquets de données avec une pluralité de fournisseurs de services (250), comprenant :
- un port d'entrée/sortie I/O apte à recevoir des paquets de données des fournisseurs de services (250) ;
- deux ou plusieurs unités de services aptes à traiter des paquets de données, chaque unité de service prenant en charge au moins un type de service ;
- une mémoire apte à stocker au moins deux bases d'informations de réexpédition FIB, chaque FIB comprenant une identité et une adresse de protocole Internet IP d'un fournisseur de services (250) correspondant, chaque FIB étant associée à au moins un type de service, à une adresse IP correspondante allouée au dispositif utilisateur (210) par le fournisseur de services (250) correspondant, et à une balise correspondante ; et
- un sélecteur de service apte à extraire une balise donnée d'un paquet de données reçu, à lire depuis la mémoire un type de service donné, et une identité d'un fournisseur de services (250) donné par utilisation de la balise donnée, et à réexpédier le paquet de données reçu vers l'une des deux ou plusieurs unités de services sur la base du type de service donné et de l'identité du fournisseur de services (250) donné.

7. Dispositif utilisateur (210) selon la revendication 6, dans lequel :
- le port I/O est en outre apte à envoyer des paquets de données au fournisseur de services (250) donné.

8. Dispositif utilisateur (210) selon la revendication 7, dans lequel :
- les deux ou plusieurs unités de services sont en outre chacune apte à produire un paquet de données d'amont et à fournir une indication du type de service donné et de l'identité du fournisseur de services (250) donné ; et
- le sélecteur de service est en outre apte à lire depuis la mémoire la balise donnée par utilisation de l'indication du type de service donné et de l'identité du fournisseur de services (250) donné, à insérer la balise donnée dans le paquet de données d'amont, et à demander le port I/O pour envoyer le paquet de données d'amont vers le fournisseur de services (250) donné.

9. Dispositif utilisateur (210) selon la revendication 6, dans lequel :
- le port I/O est en outre apte à recevoir du fournisseur de services (250) donné une réponse de services comprenant une adresse IP allouée au dispositif utilisateur (250) et une adresse IP du fournisseur de services (250) donné ; et
- la mémoire est en outre apte à stocker, en relation avec la balise donnée, les adresses IP reçues dans la réponse de service.
